# EUROPEAN PATENT APPLICATION

(11) **EP 3 124 757 A1**
(43) Date of publication of application: **01.02.2017**
(21) Application number: 15178571.4
(22) Date of filing: 28.07.2015
(51) Int. Cl.: F01K 7/40, F22D 1/00, F01K 23/02

(54) **INTEGRATED HEAT AND POWER PLANT USING GEOTHERMAL ENERGY**

(71) Applicant: Maczan, Richard, 23909 Ratzeburg (DE)
(72) Inventor: Maczan, Richard, 23909 Ratzeburg (DE)

(57) **Abstract**

Integrated heat and power plant comprises a steam power generation unit arranged to burn or to react fuels and produce electricity and comprises a supplementary heat generation unit arranged to utilize a geothermal energy, especially low-enthalpy geothermal energy and provide geothermal heat stream.

The both units are combined in that way that the steam power generation unit is arranged to employ geothermal energy stream in the regenerative Rankine cycle arrangement of the steam power generation aimed at improving thermal efficiency and operational effectivity of the steam power generation, as well reducing the level of environmentally damaging emissions.

## Description

### Technical field to which invention relates:

The present invention relates to the field of the power plant technology, and more particularly, to the concept directed at integrating steam power generating facilities with eco-friendly geothermal heat generation arrangements at a process-wide level.

### Indication of the backaround art:

More and more eco-friendly power supplies such as wind and solar are being built and put on the grid. However, although clean, these new supplies are intermittent, which increases the need for an eco-friendly, low cost and effective 'on demand' power supply. The demand for electric power is not constant over time, and storage of large amounts of electric power may be impractical. Principally, only fossil fuel and nuclear plants as well as eco-friendly biomass and geothermal power supply can deliver power "on demand". However, now days to fulfill these requirement these power supplies have to be clean, environmental friendly and economically effective.

Typical fossil fuel power plants alone practically cannot deliver clean and low cost power "on demand". A typical fossil fuel thermal power plant is a power station which burns fossil fuels and produce electricity with the effectivity in the range of 35-55%. The flue gas from combustion of the fossil fuels is discharged to the air. This gas contains carbon dioxide CO₂ and water vapor, as well as other environmentally damaging substances. Fossil fueled power stations are major emitters of CO₂, a greenhouse gas which is a contributor to global warming. Carbon capture and storage CCS of emissions is currently under development. Unfortunately, operating fossil fuel power stations with CCS equipment reduces dramatically its efficiency for around ca.20% because the CCS needs a huge portion of energy for the CO2-capture process. Furthermore, operating fossil fuel power stations at lower loads (responding on demand) reduces their efficiency furthermore (more CO₂ is produced per MWh) and increases capital costs per MWh produced, both of which are aggravated by fitting CCS equipment.

Similarly, typical nuclear power plants alone practically cannot deliver clean and low cost power "on demand". A typical nuclear power plant is a thermal power station in which the heat source is a nuclear reactor. As is typical in all steam thermal power stations the heat is used to generate steam which drives a steam turbine connected to an electric generator which produces electricity. Unfortunately, with means of a typical nuclear power plant is not possible to deliver power "on-demand" because of very low flexibility in controlling heat delivery from the reactor to the turbine. The nuclear power plants operate therefore in the base-load range and cannot react on the power demand changes in the grid.

Also, the geothermal power plants alone practically cannot effectively deliver clean and low cost power "on demand". A typical geothermal power plant includes underground facilities extracting the geothermal fluid from an underground geothermal resource and surface production facilities supplying a hot vapor under pressure and expanding the steam in a turbine generator equipped in condenser for condensing the expanded vapor with a source of coolant supplying the condenser. However, extracting the geothermal fluid with the typical needed temperature of e.g., 170-260°C requires big capital costs per hot vapor produced and additionally does not allow a high thermodynamic conversion efficiency. The result is typically low efficiency of ca. 10% and high level operating and capital costs per unit of produced power.

Typical biomass fuel power plants alone can in fact deliver clean and low cost power "on demand". They emit namely CO₂ but these emissions are considered as "environmentally neutral". However, it is useful to provide these power plants with carbon capture and storage CCS installations and consider the captured CO₂ emissions as "negative CO₂ emissions" and allocate them to the other "positive CO₂ emissions". Operating such biomass fuel power stations with CCS equipment reduces its efficiency as well because the CCS needs a big portion of energy for the CO2-capture process. Also, operating such biomass fuel power stations at lower loads (responding on demand) reduces their efficiency furthermore (more CO2 is produced per MWh) and increases capital costs per MWh produced, both of which are aggravated by fitting CCS equipment.

There is increasing interest in the use combined heat and power plants for solving the above presented problems. Integrated heat and power plants which combine conventional fossil fuel and geothermal energy are not a new use of energy. One example of it is described in the Patent USA-5442,906. Other examples of combined heat and power plants using geothermal energy are described in the report "Proceedings European geothermal Congress 2007, Unterhaching, Germany" 30 may-1 June 2007. However, the known solutions do not solve the all above presented problems.

### Technical problem to be solved:

The objective of the present invention is to provide an integrated conventional steam and geo-thermal energy schema, especially low-enthalpy energy power plant solution wherein the both types of energy can be used together to produce electricity in the steam power plants with a higher energy efficiency, with lower emissions of environmentally danger pollutions, especially lower CO2 emissions and with a bigger operational flexibility than is normally obtained when using the geothermal and conventional steam power plants individually.

### Disclosure of invention:

The present invention integrates geothermal heat arrangement into the steam power plant arrangement forming an integrated heat and power plant.

The integrated heat and power plant comprises a steam power generation unit arranged to burn or to react fuels and produce electricity and comprises a supplementary heat generation unit arranged to utilize a geothermal energy, especially low-enthalpy energy and provide geothermal heat stream.

The both units are combined in that way that the steam power generation unit is arranged to employ geothermal energy stream from the geothermal heat generation unit in the regenerative Rankine cycle arrangement of the steam power generation aimed at improving thermal efficiency and operational effectivity of the steam power generation, as well reducing the level of environmentally damaging emissions.

The steam power generation unit is arranged to employ geothermal heat stream in the regenerative Rankine cycle arrangement of the steam power generation with means of at least one geothermal feed water regenerator and is preferably arranged to intake low-enthalpy geothermal heat stream to the steam-to-water type feed water heater placed in the low pressure section of the regenerative Rankine cycle arrangement of the steam power generation;

If the steam power generation unit is linked to the CO2-capture installation utilizing its heat e.g. the extracted steam from the turbine, the proposed solution performs balancing the heat energy stream supplied to the CO2-capture installation by means of the geothermal energy stream without decreasing the power output of the power generation unit;

The proposed solution is arranged to perform control of the power output of the steam power generation units, especially base-load units such as nuclear power plants through delivering additional geothermal energy into the regenerative Rankine cycle of the steam power generation, particularly for the peak-load mode;

The proposed solution makes it possible to utilize a geothermal low-enthalpy energy sources for production of electricity with a higher efficiency than in a typical geothermal power generation.

### Brief description of drawings:

Fig.1 shows a process schematic of a steam power generation unit in combination with the geothermal heat arrangement in accordance with the preferred embodiment of the present invention.
Fig.2 shows a process schematic of a geothermic heat generation unit arrangement in combination with the steam power generation unit shown in Fig.1;
Fig.3 shows the regenerative Ranking process improvement of a steam power generation unit shown in Fig.1 and in Fig.2;
Fig.4 shows the improved range of the usage of the geothermal energy in accordance with the preferred embodiment of the present invention.

### Description of carrying out the invention:

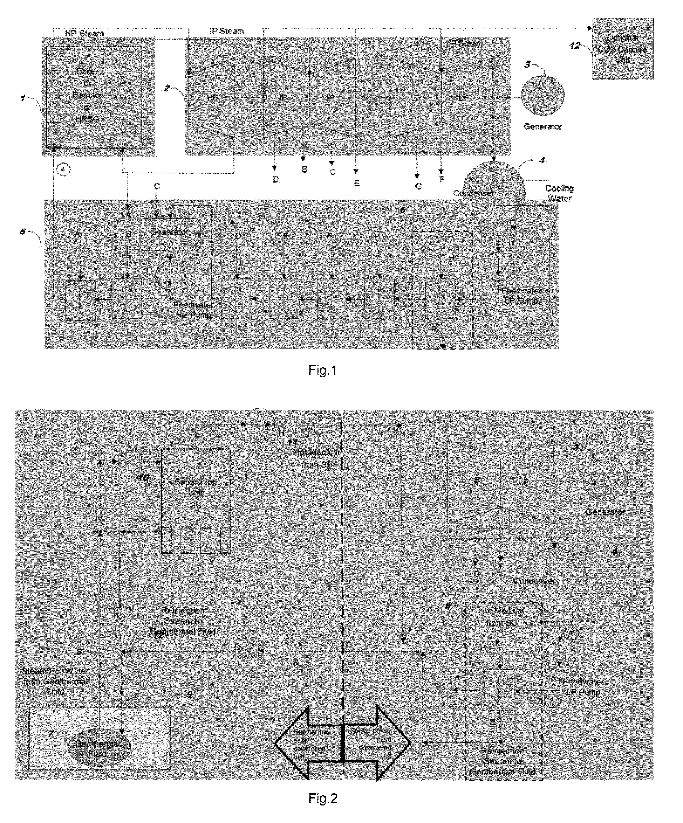

Referring to the drawing Fig.1 a steam power generation unit in accordance with the preferred embodiment of the present invention comprises a steam generation section ***1*** which generates high pressure HP steam expanded further subsequently in the HP high pressure, IP middle pressure and LP low pressure parts of the steam turbine entity ***2*** to convert it into mechanical energy, which then operates an electrical generator ***3.*** A condenser ***4*** together with a cooling water arrangement is used for steam condensing.

Steam generation section can consist of a steam boiler, or heat recovery steam generator HRSG or a nuclear reactor. If the burned fuel is a fossil fuel such a coal, gas or biomass, the heat energy is generated from combustion of the fuel simultaneously producing flu gas, which contains CO₂. The CO₂ gases are environmentally dangerous and they can be captured in the CO2- capture unit ***12*** and removed. Operating fossil fuel power stations with CCS unit reduces dramatically its efficiency because the CCS needs a huge portion of energy for the CO2-capture process. The portion of energy for the CO2-capture process depends on technology and varies in the range 20-30% of the power output. Moreover, the energy needed for the CO2-capture process requires appropriate enthalpy potential such as e.g. thermal potential of the steam outlet from the IP part of the turbine with the temperature of ca. 200°C and more.

Fractions of the steam delivered to the turbine are extracted from the turbine in the extraction points A-G and are used in the correspondent (A-G) feed water heaters of the regenerative Rankine cycle ***5*** for preheating the feed water before it enters the steam generator. The regenerative Rankine cycle ***5*** consist of the closed feed water heaters A-B, D-G) and open feed water heaters (Deaerator C) and feed water pumps (LP and HP pump) used for transporting the water to the steam generator ***1*.** Feed water heaters improve plant heat rate, because they increase the feed water temperature before it enters the steam generator ***1***. However, the steam turbine power is decreased by the feed water heaters because the heaters use steam extracted from the steam turbine that otherwise would have been expanded through the turbine to generate electric power.

Fig.2 shows the conventional schematic of a geothermal heat generation unit. The geothermal heat generation unit includes underground facilities ***7*** extracting the geothermal steam or hot water ***8*** from an underground geothermal resource ***9*** and surface production facilities together with a separation unit SU ***10*** supplying a hot medium under pressure ***11*** to the inlet H of the feed water heater arrangement ***6.*** The hot medium after being employed in the heater arrangement ***6*** is returning as a cold reinjection stream ***12*** to the Geothermal Fluid ***7.*** The feed water heater arrangement ***6 is*** arranged as an additional feed water heater but also one of the existing feed water heaters (A-G) can be used for the feed water preheating by means of the geothermal heat stream.

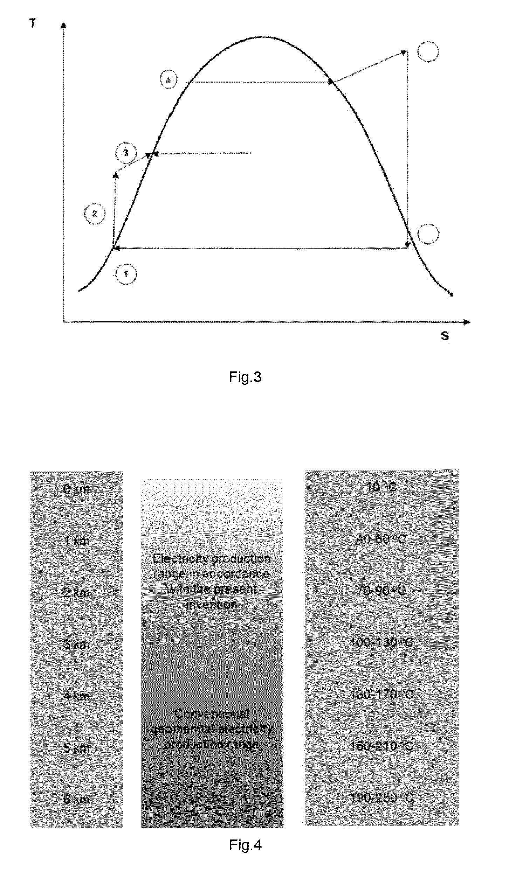

Fig.3 shows the regenerative Ranking cycle (T-S) of a steam power generation unit. The analysis of the Rankine cycle using the second law shows that the largest energy destruction in the thermal process of electricity production occurs during the heat-addition process. Therefore any attempt to reduce the energy destruction should start with this process. When we analyze the Rankine cycle showed in Fig.3 we can notice that a considerable percentage of the total energy input is used to heat the high pressure water from T¹ (point 1) to its saturation (point 4). To reduce this energy, the feed water is conventionally preheated before it enters the boiler by intercepting some of the steam stream as it expands in the turbine and mixing it with the water as it exits the first pump. This results in an increase in the average temperature at which the heat is supplied to the steam generator and therefore the thermal efficiency of the cycle increases. This configuration of the Rankine cycle is called: regenerative Rankine cycle and presented in the arrangement ***5*** in Fig.1.

At present invention as shown in the drawing Fig.2 the hot medium stream from separation unit SU ***10*** is not employed for power generation in the primary cycle of the power generator e.g. directly in the turbine generator but it is used indirectly in a regenerative Rankine cycle ***5*** of the steam power generation unit for preheating the feed water as shown in the drawings Fig.1 and Fig.2. The preheating by means of geothermal energy will result in an additional increase in the average temperature from point 2 to 3 rising in addition thermal efficiency of the regenerative Rankine cycle as shown in the drawing Fig.3.

The heat transfer between hot medium from SU ***10*** and the feed water occurs in feed water heaters. A feed water heater is basically a heat exchanger where heat is transferred from the high temperature stream to low temperature feed water. This can be performed in a steam-water or water-water heat exchangers depending of the physical state of the hot medium. Water-to-water heat exchangers transfer heating energy from water on one side of the heat exchanger (fluid hot medium from the SU) to water on the other side of the heat exchanger (feed water). Water-to-water heat exchangers are simple, inexpensive but they have not good heat transfer characteristics. For the low-enthalpy geothermal energy sources working under the low pressure conditions it is possible to use steam to heat feed water in the heat exchangers. Steam-to-water heat exchangers are exchangers that transfer heating energy from steam (steam hot medium from SU) on one side of the heat exchanger to water on the other side of the heat exchanger (feed water). Steam-to-water heat exchangers are typically used as feed water exchangers in power plants and are simple, inexpensive and have very good heat transfer characteristics. At present invention in the combined heat and power plant the supplementary heat generation unit is arranged to perform intake geothermal heat stream to the feed water in the low pressure section of the regenerative Rankine cycle arrangement of the steam power generation where the feed water temperatures are in the range of up to 150°C. It allows employment a low-enthalpy geothermal energy in the lower temperature range extracted from the relatively flat located geothermal fluid beds in the earth.

According to the present invention where the feed water is additionally heated through the geothermal hot fluid respectively less extracted steam is being exhausted from the turbine to the feed water heaters and more steam is expanded through the turbine to generate more power. Thus, the supplementary heat generation unit is arranged to perform control of the power output of the generator ***3.*** In this way it is possible to regulate the power output of the generating unit through controlling the geothermal heat delivery to the additional heat exchanger arrangement ***6.*** As a result, it is possible to respond to the peak-load demand from the grid, especially in the nuclear power plants typically arranged as base-load plants.

At present invention where the steam power generation unit is arranged to burn fossil or biomass fuel along with the CO2-capture arrangement ***12*** the supplementary heat generation unit is arranged to perform balancing heat energy consumed in the CO2-capture arrangement and respectively certain extra quantity of the extracted steam can be exhausted from the turbine to the CO2-capture arrangement ***12*** without decreasing the output power of the power generator.

The present invention can be applied by typical biomass fuel power plants that similarly emit CO₂ like fossil fuel power plants but these emissions are considered as "environmentally neutral". It is useful to provide these power plants with carbon capture and storage CCS installations together with the solution proposed in the present invention and consider the effectively captured CO₂ emissions as "negative CO₂ emissions" and allocate them to the other "positive CO₂ emissions" in other power plants.

In accordance with the preferred embodiment of the present invention the combining uses of the geothermal heat for power generation makes it possible to utilize low-enthalpy geothermal heat sources to be found in the deepness of 1-3 km in the earth for the effective power generation. The present solution enables usage of the low- enthalpy geothermal energy with the temperature of 70-100°C for production of electricity and finally makes it possible to do it with a low capital cost, what in turn improves power plant economics essential. The usage range of the geothermal energy sources in accordance with the present invention is presented in the drawing Fig.4.

The present invention also enables increasing operational effectivity of the thermal steam power generation unit because it makes possible to perform control of the power output of the conventional and nuclear thermal power generation units by means of the geothermal energy intake to the regenerative Rankine cycle and enables delivering peak load power with lower capital costs per MWh at lower loads.

In summary, in accordance with the preferred embodiment of the present invention in combining uses of the geothermal and conventional energies for power generation, the integrated power plant becomes more net efficient, with more flexible power output regulation, and with less environmentally damaging substances emitted to the ecosystem, which in turn improves power plant economics.

Although the invention has been explained in relation to its preferred embodiment as mentioned above, it is to be understood that many other possible modifications and variations can be made without departing from the scope of the present invention.

## Claims

1. Integrated heat and power plant comprising a steam power generation unit arranged to burn or to react fuels and produce electricity as well as comprising a supplementary heat generation unit arranged to utilize geothermal energy, especially low-enthalpy energy and provide geothermal heat stream combined in that way that the said steam power generation unit is arranged to perform employing the said geothermal heat stream in the regenerative Rankine cycle arrangement of the said steam power generation aimed at improving thermal efficiency and operational effectivity of the steam power generation unit;

2. Integrated heat and power plant as claimed in Claim 1, wherein the said steam power generation unit is arranged to perform employing the said geothermal heat stream in the said regenerative Rankine cycle arrangement consisting of at least one geothermal feed water heater;

3. Integrated heat and power plant as claimed in Claim 2, wherein the said steam power generation unit is arranged to perform employing the said geothermal heat stream in the said regenerative Rankine cycle arrangement by means of a steam-to-water type feed water heater;

4. Integrated heat and power plant as claimed in any one of the proceeding claims, wherein the said supplementary geothermal heat generation unit is arranged to perform control of the power output of the said steam power generation unit;

5. Combined heat and power plant as claimed in any one of the proceeding claims, wherein the said steam power generation unit is arranged to burn carbon fuels along with the CO2-capture arrangement and the said supplementary geothermal heat generation unit is arranged to supply balancing heat energy consumed in the said CO2-capture arrangement;

6. Combined heat and power plant as claimed in Claim 4, wherein the said steam power generation unit is arranged to react nuclear fuel and produce base load electricity and the said supplementary geothermal heat generation unit is arranged to perform control of the peak load of the said steam power generation unit;

## Amended claims

### Amended claims in accordance with Rule 137(2) EPC.

1. Integrated heat and power plant comprising a steam power generation unit arranged to burn or to react fuels and produce electricity as well as comprising a supplementary heat generation unit arranged to utilize low-enthalpy geothermal energy and provide geothermal heat stream combined in that way that the said steam power generation unit is arranged to insert the said low-enthalpy geothermal heat stream into the low-enthalpy part of regenerative Rankine cycle arrangement of the said steam power generation aimed at contrary extracting an equivalent auxiliary energy stream with a higher enthalpy from a higher-enthalpy part of the regenerative Rankine cycle arrangement improving operational effectivity of the steam power generation unit;

2. Integrated heat and power plant as claimed in Claim 1, wherein the said steam power generation unit is arranged to employ the said extracted auxiliary energy stream to supply CCS installation.

3. Integrated heat and power plant as claimed in Claim 1, wherein the said steam power generation unit is arranged to employ the said extracted auxiliary energy stream to supply ancillary heating systems of the power plant.

4. Integrated heat and power plant as claimed in Claim 1-3, wherein the said steam power generation unit is arranged to perform employing the said geothermal heat stream in the said regenerative Rankine cycle arrangement consisting of at least one geothermal feed water heater using low-enthalpy geothermal heat to heating the feed water in place of using related low-enthalpy extracted steam;

5. Integrated heat and power plant as claimed in any one of the proceeding claims, wherein the said steam power generation unit is arranged to perform employing the said geothermal heat stream in the said regenerative Rankine cycle arrangement by means of at last one existing steam-to-water type feed water heater;

6. Combined heat and power plant as claimed in any one of the proceeding claims, wherein the said steam power generation unit is arranged to burn or react fuel and produce base load electricity and the said supplementary geothermal heat generation unit is arranged to insert the said low-enthalpy geothermal heat stream into the low-enthalpy part of regenerative Rankine cycle arrangement of the said steam power generation aimed at controlling the output of the said steam power generation unit;
